# FASCICULE DE BREVET EUROPEEN

(11) **EP 3 898 330 B1**
(45) Date de publication et mention de la délivrance du brevet: **07.02.2024**
(21) Numéro de dépôt: 19832022.8
(22) Date de dépôt: 13.12.2019
(51) Int. Cl.: B60Q 1/26, B60R 19/50, F21S 43/20, B29C 45/14, G09F 13/06, G09F 13/08, G09F 21/04

(54) **ELEMENT DE CARROSSERIE RÉTROCÉCLAIRÉE ET PROCÉDÉ DE FABRICATION**
HINTERLEUCHTETES KAROSSERIETEIL UND HERSTELLUNGSVERFAHREN
BACKLIT BODYWORK PART AND PRODUCTION METHOD

(30) Priorité: 17.12.2018 FR 1873061
(43) Date de publication de la demande: 27.10.2021
(73) Titulaire: Compagnie Plastic Omnium, 69007 Lyon (FR)
(72) Inventeur: GUILLIER, Stéphane, 01150 SAINTE-JULIE (FR); STABLO, Frédéric, 01150 SAINTE-JULIE (FR); VIDAL, Sophie, 01150 SAINTE-JULIE (FR)
(74) Mandataire: LLR
(86) Numéro de dépôt international: PCT/EP2019/085194
(87) Numéro de publication internationale: WO 2020/126944

(56) Documents cités:
- WO-A1-2018/225029
- DE-A1-102018 211 457
- DE-U1-202005 020 199
- FR-A1- 2 945 992
- FR-A1- 3 016 578
- GB-A- 2 552 996
- US-A1- 2015 210 226
- US-A1- 2018 264 991

## Description

L'invention concerne un élément de carrosserie d'un véhicule automobile et plus particulièrement une pièce de style destinée à contribuer à l'aspect général extérieur du véhicule.

Ces pièces de style ou ces éléments de carrosserie ont pour objet de rehausser une ligne ou de souligner une forme dans le but de renforcer l'image que le constructeur souhaite associer à sa marque ou à son modèle de véhicule.

A titre d'exemple, les baguettes chromées courant le long de la partie latérale du véhicule, les protections de bas de caisse, l'emblème de la marque, les enjoliveurs de poignées de porte, les coques de rétroviseurs sont ces pièces de style dont le design fait l'objet d'un soin particulier de la part des concepteurs du véhicule. Par extension, toutes les pièces de la carrosserie visibles de l'extérieur et participant à l'aspect général du véhicule, telles qu'un ouvrant, un parechoc, une calandre, peuvent être considérées également comme des éléments de carrosserie ou des pièces de style entrant dans le champ d'application de l'invention.

Dans le but de renforcer l'effet produit par ces éléments de carrosserie, il a été proposé de placer une source lumineuse en arrière de la surface de l'élément de carrosserie formé d'un matériau transparent ou translucide, et de modifier la transparence du revêtement recouvrant l'élément de carrosserie de manière à faire apparaître un effet lumineux lorsque les conditions d'éclairage extérieur sont insuffisantes et que la source de lumière est activée. Le document GB 2 552 996 A divulgue un exemple de panneau pour véhicule rétroéclairé.

On rappelle que la transmittance d'un matériau est la fraction du flux lumineux le traversant. Ainsi la transmittance représente le rapport de l'intensité lumineuse transmise par le matériau sur l'intensité lumineuse incidente.

Un élément est qualifié de transparent lorsqu'il se laisse traverser par la lumière dans le domaine du visible en permettant de distinguer nettement les objets se trouvant derrière et a une transmittance d'au moins 70%. Un élément est qualifié de semi transparent lorsqu'il laisse traverser la lumière dans le domaine du visible en permettant de distinguer nettement les objets se trouvant derrière, et possède une transmittance inférieure à 70%, sans pour autant être opaque.

Un élément est qualifié de translucide lorsqu'il se laisse traverser par la lumière dans le domaine du visible, mais sans permettre de distinguer nettement les objets se trouvant derrière et a une transmittance d'au moins 50%.Un élément est qualifié de semi translucide lorsqu'il se laisse traverser par la lumière dans le domaine du visible sans permettre de distinguer nettement les objets se trouvant derrière, et possède une transmisttance inférieure à 50%, sans pour autant être opaque.

Un élément est qualifié de semi opaque lorsqu'il se laisse traverser par la lumière dans le domaine du visible sans permettre de distinguer nettement les objets se trouvant derrière, et possède une transmisttance inférieure à 10%, sans pour autant être opaque. On entend par opaque un matériau qui ne se laisse pas traverser par la lumière, en possédant une transmittance de 0%.

Ainsi, lorsque le véhicule est éclairé par la lumière du jour, le dispositif optique est éteint, et l'apparence de l'élément de carrosserie est donnée par le revêtement de peinture formant la couche externe de l'élément de carrosserie. A l'inverse, lorsque les conditions d'éclairage diminuent, ou parfois même en plein jour, comme cela est de plus en plus demandé par les designers des constructeurs automobiles, le dispositif optique est allumé et l'élément de carrosserie apparaît sous la forme d'une surface uniformément lumineuse.

En activant le dispositif d'éclairage, il est également possible de faire apparaître des motifs particuliers tels qu'un logo à la marque du constructeur, ou encore des éléments figuratifs particuliers qui restent invisibles lorsque le véhicule est éclairé par la lumière du jour.

Un tel dispositif d'éclairage est proposé dans le document FR 3 046 387, qui décrit un élément de carrosserie de véhicule automobile comprenant un corps formé d'une matière transparente, disposé de façon visible sur un support formant partie de la carrosserie du véhicule, dont une face est recouverte d'un revêtement de décor semi transparent ou semi translucide. Un guide de lumière diffusant raccordé à une source de lumière est disposé entre le support et le corps de l'élément de carrosserie.

Néanmoins, il existe un besoin de faire en sorte qu'une fois le dispositif optique allumé, la surface illuminée de l'élément de carrosserie se distingue suffisamment bien du reste de la carrosserie. Par exemple, si l'on souhaite que la surface illuminée apparaisse d'une certaine couleur, qui diffère de celle du reste de la carrosserie, il convient de s'assurer que l'on obtient un contraste suffisant entre la couleur de la surface lumineuse et celle de la peinture du reste de la carrosserie. Ce contraste est particulièrement nécessaire dans le cas d'un éclairage du dispositif en plein jour, pour des raisons esthétiques. En effet, à l'heure actuelle, pour des pièces de carrosserie de grandes dimensions il n'existe pas de solution qui permette à la fois de rendre l'élément de carrosserie sensiblement identique au reste de la carrosserie lorsque la source de lumière est éteinte (on parle « d'invisibilité » à l'oeil nu) et de l'en distinguer très nettement lorsque la source de lumière est allumée.

L'invention a notamment pour but de répondre à ce besoin en fournissant un élément de carrosserie de véhicule automobile selon la revendication 1.

Grâce au fait que le revêtement de la surface interne de la pièce de carrosserie comprenne une zone transparente à travers laquelle le rayonnement de la source de lumière peut passer, on peut obtenir un contraste important entre la couleur de la surface lumineuse et celle de la peinture du reste de la carrosserie lorsque la source de lumière est allumée, tout en rendant l'élément de carrosserie sensiblement identique au reste de la carrosserie lorsque la source de lumière est éteinte. En effet, la zone transparente n'est pas visible lorsque la source de lumière n'est pas allumée, mais permet à la lumière de passer lorsque la source de lumière est allumée, ce qui permet d'obtenir une couleur différente pour l'élément de carrosserie avec un fort contraste entre celle-ci et celle du reste de la carrosserie.

En outre, le fait que la zone transparente soit située sur la surface interne de la pièce de carrosserie évite toute altération de la surface externe de la pièce de carrosserie, et donc d'éventuelles aspérités ou changements d'apparence qui nuiraient à son esthétique.

On cherche notamment à obtenir que la surface externe de l'élément de carrosserie, lorsque la source de lumière est allumée, émette une lumière d'une intensité lumineuse d'au moins 15 candelas.

Selon un premier mode de réalisation de l'invention, le revêtement opaque de la surface interne de la pièce de carrosserie est composé au moins d'une couche de primaire opaque.

On rappelle ici que lors d'un procédé classique de peinture d'une pièce de véhicule automobile en matière plastique, on applique sur un primaire, une base puis un vernis, afin d'obtenir une surface peinte. En effet, l'étape de peinture d'une pièce de véhicule automobile en matière plastique comporte généralement une étape de traitement de surface, suivie d'étapes d'application de trois revêtements différents sur la pièce. Un premier revêtement, appelé primaire, a pour fonction de favoriser l'accroche sur la pièce du second revêtement, en améliorant la conductivité et l'adhérence de la base (couche de couleur). Ainsi, dans un procédé de peinture habituel, le primaire constitue un revêtement conducteur servant à retenir et attirer les couches de revêtement suivantes par électrostatisme. Un second revêtement, appelé base, a pour fonction de donner la couleur à la pièce. Enfin, un troisième revêtement, appelé vernis, a pour fonction de protéger la couche de base contre les agressions extérieures.

Dans ce cas, de préférence, la zone transparente du revêtement opaque de la surface interne de la pièce de carrosserie est obtenue par :
- grattage du revêtement opaque par application d'un rayonnement laser,
- attaque chimique du revêtement opaque,
- grattage mécanique du revêtement opaque, ou
- chauffage du revêtement opaque.

Le grattage du revêtement opaque par application d'un rayonnement laser est à privilégier, dans la mesure où il permet une plus grande précision dans la délimitation de la zone transparente, et une moindre altération du reste du revêtement opaque.

Selon un deuxième mode de réalisation de l'invention, le revêtement opaque de la surface interne de la pièce de carrosserie est composé au moins d'un film opaque.

Un tel film est, de façon classique, fabriqué en réalisant dans un premier temps une couche de film plane qui forme une première couche. Puis, on ajoute des couches de couleur opaque là où cela est nécessaire.

On utilise de préférence un film décoratif, préférentiellement thermoformé, réalisé en utilisant au moins l'une des matières suivantes : de l'Acrylonitrile Butadiène Styrène translucide, du polypropylène, du Polycarbonate, du polyamide, du Polyméthacrylate d'éthyle, du polyuréthane, et du polyéthylène téréphtalate.

Une façon classique de fixer le film sur la pièce de carrosserie est de l'adhésiver sur la pièce de carrosserie.

Dans le cas où le revêtement opaque est composé au moins d'un film opaque, de préférence, la zone transparente du revêtement opaque de la surface interne correspond à une zone non opacifiée du film ou une zone découpée du film.

On entend ici par zone non opacifiée du film une zone du film qui n'a pas bénéficié d'une application d'une couleur opaque ou d'une opacification du film initialement transparent contrairement au reste du film.

Dans le cas où la zone transparente est une zone découpée du film, la zone transparente correspond à une absence de matière de film opaque.

Avantageusement, la pièce de carrosserie est réalisée en polypropylène. Ce matériau permet en effet de laisser passer en partie le rayonnement de la source lumineuse, ayant, sans traitement particulier, une transmission lumineuse comprise entre 15% et 30%.

Avantageusement, le revêtement semi transparent de la surface externe de la pièce de carrosserie comprend une base de peinture teintée dont l'épaisseur est de préférence comprise entre 2 et 15 micromètres, recouverte d'un vernis transparent dont l'épaisseur est de préférence comprise entre 5 et 30 micromètres.

Dans une variante, le revêtement semi transparent de la surface externe de la pièce de carrosserie comprend en outre un primaire transparent dont l'épaisseur est de préférence comprise entre 5 et 30 micromètres, appliqué directement sur surface externe de la pièce de carrosserie

De préférence, la source de lumière comprend des diodes électroluminescentes ou des fibres optiques.

Avantageusement, la longueur d'onde de la source de lumière est choisie en fonction de la coloration de la pièce de carrosserie et/ou du revêtement semi transparent de sorte que lorsque la source de lumière est allumée, la face externe possède des secondes composantes trichromatiques prédéterminées, distinctes des premières composantes trichromatiques prédéterminées.

L'invention concerne également un procédé de fabrication d'un élément de carrosserie selon la revendication 3, comprenant les étapes suivantes :
- injection de la pièce de carrosserie dans un moule d'injection,
- retrait de la pièce de carrosserie du moule,
- masquage de la surface externe de la pièce de carrosserie,
- application de la couche de primaire opaque sur la surface interne de la pièce de carrosserie
- démasquage de la surface externe de la pièce de carrosserie,
- application d'une couche de base de peinture teintée sur la surface externe de la pièce de carrosserie,
- application d'un vernis sur la surface externe de la pièce de carrosserie
- grattage de la couche de primaire opaque pour obtenir une zone transparente du revêtement de la surface interne de la pièce de carrosserie, et
- intégration de la source lumineuse en regard de la zone transparente de la surface interne de la pièce de carrosserie.

L'invention concerne également un procédé de fabrication d'un élément de carrosserie selon l'invention, comprenant les étapes suivantes :
- injection de la pièce de carrosserie dans un moule d'injection,
- retrait de la pièce de carrosserie du moule,
- masquage de la surface interne de la pièce de carrosserie,
- application d'une couche de base de peinture teintée sur la surface externe de la pièce de carrosserie,
- application d'un vernis sur la surface externe de la pièce de carrosserie
- démasquage de la surface interne de la pièce de carrosserie,
- pose du film opaque sur la surface interne de la pièce de carrosserie, et
- intégration de la source lumineuse en regard de la zone transparente de la surface interne de la pièce de carrosserie.

L'invention concerne également un procédé de fabrication d'un élément de carrosserie selon l'invention, comprenant les étapes suivantes :
- pose du film opaque sur la matrice d'un moule d'injection de la pièce de carrosserie,
- injection de la pièce de carrosserie dans le moule d'injection, le film étant en regard de la surface interne de la pièce de carrosserie,
- retrait de la pièce de carrosserie du moule,
- masquage de la surface interne de la pièce de carrosserie,
- application d'une couche de base de peinture teintée sur la surface externe de la pièce de carrosserie,
- application d'un vernis sur la surface externe de la pièce de carrosserie
- démasquage de la surface interne de la pièce de carrosserie, et
- intégration de la source lumineuse en regard de la zone transparente de la surface interne de la pièce de carrosserie.

### Brève description des figures

L'invention sera mieux comprise à la lecture de la description qui va suivre donnée uniquement à titre d'exemple et faite en se référant aux dessins annexés dans lesquels :
[Fig. 1] est une vue en perspective de la partie avant d'un véhicule automobile muni de deux éléments de carrosserie selon l'invention.
[Fig. 2] est une vue schématique d'une coupe transversale d'un élément de carrosserie d'un véhicule automobile selon un premier mode de réalisation de l'invention.
[Fig. 3] est une vue schématique d'une coupe transversale d'un élément de carrosserie d'un véhicule automobile selon un deuxième mode de réalisation de l'invention.
[Fig. 4] est une vue schématique d'une coupe transversale d'un élément de carrosserie d'un véhicule automobile selon un troisième mode de réalisation de l'invention.

### Description détaillée

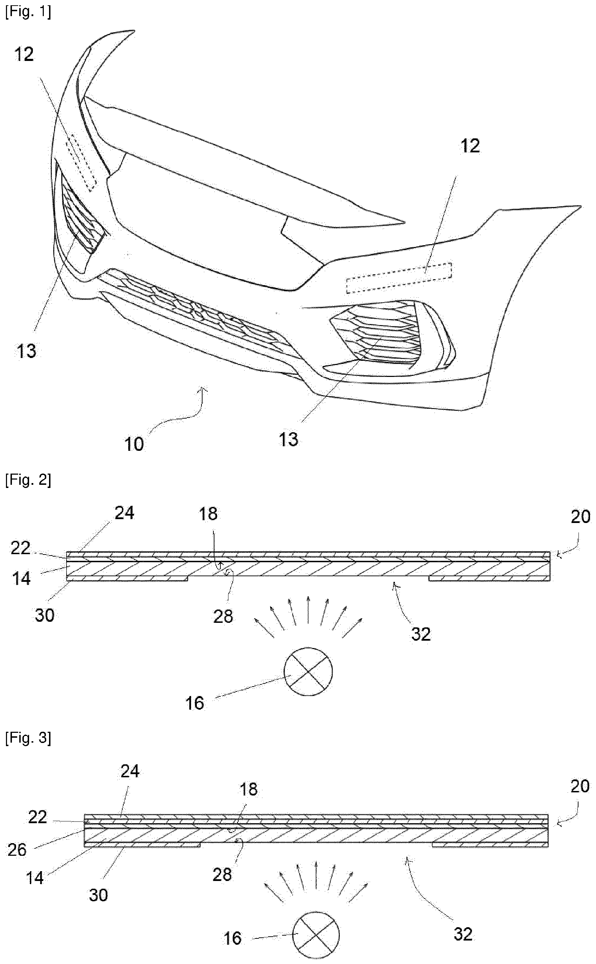

On a représenté à la figure 1 la partie avant 10 d'un véhicule automobile, munie de deux éléments de carrosserie 12 selon l'invention. Les éléments de carrosserie 12 sont, par exemple, disposés ici au-dessus des feux avant 13, pour rehausser la ligne des feux avant 13.

L'élément de carrosserie 12 comprend une pièce de carrosserie 14 réalisée en un matériau plastique, de préférence du polypropylène derrière laquelle est disposée une source de lumière 16. La pièce de carrosserie 14 est de préférence obtenue par moulage. Dans les exemples représentés, il s'agit d'une peau de pare-chocs.

La source de lumière 16 comprend des diodes électroluminescentes ou des fibres optiques.

Comme on peut le voir sur les figures 2 à 4, la pièce de carrosserie 14 comporte sur sa surface externe 18, c'est-à-dire sur la surface de la pièce de carrosserie 14 regardant à l'extérieur du véhicule et visible de l'extérieur, un revêtement de décor semi transparent 20.

Le revêtement semi transparent 20 coloré possède, lorsque la source de lumière 16 est éteinte, des premières composantes trichromatiques prédéterminées.

Les premières composantes trichromatiques prédéterminées sont avantageusement choisies comme étant les mêmes que celles de la couleur qui a été retenue pour le restant de la carrosserie du véhicule automobile. Ainsi, lorsque la source de lumière 16 est éteinte, l'élément de carrosserie 12 ne peut pas être distingué, au toucher ou à l'oeil nu, du reste de la carrosserie de la partie avant 10 du véhicule.

Dans le premier mode de réalisation illustrée à la figure 2, le revêtement semi transparent 20 de la surface externe 18 de la pièce de carrosserie 14 comprend une base de peinture teintée 22 dont l'épaisseur est de préférence comprise entre 2 et 15 micromètres, recouverte d'un vernis transparent 24 dont l'épaisseur est de préférence comprise entre 5 et 30 micromètres.

On notera ici que dans ce mode de réalisation, cette base de peinture teintée 20 est appliqué sans primaire.

Dans le deuxième mode de réalisation illustrée à la figure 3, le revêtement semi transparent 20 de la surface externe 18 de la pièce de carrosserie 14 comprend en outre un primaire transparent 26 dont l'épaisseur est de préférence comprise entre 5 et 30 micromètres, appliqué directement sur surface externe 18 de la pièce de carrosserie 14.

Par ailleurs, la pièce de carrosserie 14 comporte sur sa surface interne 28, c'est-à-dire sur la surface de la pièce de carrosserie 14 regardant à l'intérieur du véhicule et invisible de l'extérieur, un revêtement opaque 30.

Dans les modes de réalisation illustrés aux figures 2 et 3, ce revêtement opaque 30 est composé d'une couche d'un primaire opaque.

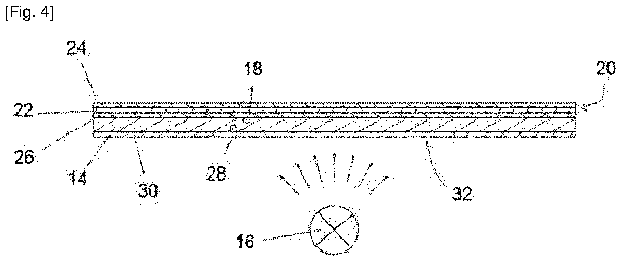

Dans le mode de réalisation illustré à la figure 4, le revêtement opaque 30 est composé d'un film opaque.

Un tel film est, de façon classique, fabriqué en réalisant dans un premier temps une couche plane de film qui forme une première couche. Puis, on ajoute des couches de couleur opaque là où cela est nécessaire.

On utilise de préférence un film décoratif, préférentiellement thermoformé, réalisé en utilisant au moins l'une des matières suivantes : de l'Acrylonitrile Butadiène Styrène translucide, du polypropylène, du Polycarbonate, du polyamide, du Polyméthacrylate d'éthyle, du polyuréthane, et du polyéthylène téréphtalate.

Une façon classique de fixer le film 30 sur la pièce de carrosserie est de l'adhésiver sur la pièce de carrosserie 14.

Quelque soit le mode de réalisation, le revêtement opaque 30 de la surface interne 18 de la pièce de carrosserie 14 comprend, en regard de la source de lumière 16 une zone transparente 32 à travers laquelle le rayonnement de la source de lumière 16 peut passer, de sorte que, lorsque la source de lumière 16 est allumée, la longueur d'onde du rayonnement émis par la source de lumière traversant la zone transparente 26, la pièce de carrosserie 14 et le revêtement semi transparent coloré 22 est modifiée de façon que la surface externe 18 possède des secondes composantes trichromatiques prédéterminées, distinctes des premières composantes trichromatiques prédéterminées.

Dans les deux premiers modes de réalisation représentés aux figures 2 et 3, le revêtement opaque 30 de la surface interne 20 de la pièce de carrosserie 14 étant composé d'une couche d'un primaire opaque, la zone transparente 32 obtenue par :
- grattage du revêtement opaque 30 par application d'un rayonnement laser,
- attaque chimique du revêtement opaque 30,
- grattage mécanique du revêtement opaque 30, ou
- chauffage du revêtement opaque 30.

Le grattage du revêtement opaque 30 par application d'un rayonnement laser est à privilégier, dans la mesure où il permet une plus grande précision dans la délimitation de la zone transparente 32, et une moindre altération du reste du revêtement opaque 24.

Dans le cas où le revêtement opaque 30 est composé d'un film opaque, la zone transparente 32 du revêtement opaque 30 de la surface interne 28 correspond à une zone non opacifiée du film ou une zone découpée du film. Dans ce deuxième cas, la zone transparente 32 correspond donc à une absence de matière du film.

Dans le troisième mode de réalisation illustré à la figure 4, la zone transparente 32 correspond à une zone non opacifiée du film. On entend par zone non opacifiée du film une zone du film qui n'a pas bénéficié de l'application d'une couleur opaque ou d'une opacification du film initialement transparent contrairement au reste du film.

On va maintenir décrire un procédé de fabrication d'un élément de carrosserie 12 selon le premier mode de réalisation. Il comprend les étapes suivantes :
- injection de la pièce de carrosserie 14 dans un moule d'injection,
- retrait de la pièce de carrosserie 14 du moule,
- masquage de la surface externe 18 de la pièce de carrosserie,
- application de la couche de primaire opaque 30 sur la surface interne 28 de la pièce de carrosserie 14
- démasquage de la surface externe 18 de la pièce de carrosserie,
- application d'une couche de base de peinture teintée 22 sur la surface externe 18 de la pièce de carrosserie,
- application d'un vernis 24 sur la surface externe 18 de la pièce de carrosserie
- grattage de la couche de primaire opaque 30 pour obtenir une zone transparente 32 du revêtement de la surface interne 28 de la pièce de carrosserie, et
- intégration de la source lumineuse 16 en regard de la zone transparente 32 de la surface interne 28 de la pièce de carrosserie.

On va maintenir décrire un procédé de fabrication d'un élément de carrosserie 12 selon le troisième mode de réalisation. Il comprend les étapes suivantes :
- injection de la pièce de carrosserie 12 dans un moule d'injection,
- retrait de la pièce de carrosserie 14 du moule,
- masquage de la surface interne 28 de la pièce de carrosserie 12,
- application d'une couche de base de peinture teintée 22 sur la surface externe 18 de la pièce de carrosserie,
- application d'un vernis 24 sur la surface externe de la pièce de carrosserie
- démasquage de la surface interne 28 de la pièce de carrosserie,
- pose du film opaque 30 sur la surface interne 28 de la pièce de carrosserie, et
- intégration de la source lumineuse 16 en regard de la zone transparente 32 de la surface interne 28 de la pièce de carrosserie.

Selon une variante, le procédé de fabrication d'un élément de carrosserie 12 selon le troisième mode de réalisation comprend les étapes suivantes :
- pose du film opaque 30 sur la matrice d'un moule d'injection de la pièce de carrosserie 12,
- injection de la pièce de carrosserie 14 dans le moule d'injection, le film 30 étant en regard de la surface interne 28 de la pièce de carrosserie
- retrait de la pièce de carrosserie 14 du moule,
- masquage de la surface interne 28 de la pièce de carrosserie,
- application d'une couche de base de peinture teintée 22 sur la surface externe 18 de la pièce de carrosserie,
- application d'un vernis 24 sur la surface externe de la pièce de carrosserie
- démasquage de la surface interne 28 de la pièce de carrosserie, et
- intégration de la source lumineuse en regard de la zone transparente 32 de la surface interne (28) de la pièce de carrosserie.

L'invention n'est pas limitée aux modes de réalisation présentés et d'autres modes de réalisation apparaîtront clairement à l'homme du métier. Il est notamment possible de combiner les modes de réalisation et variantes décrits.

En particulier, il est envisagé de pouvoir remplacer la couche de primaire opaque par un film opaque et vice versa.

### Liste des références

10 : Partie avant de la carrosserie
12 : Elément de carrosserie
13 : Feux avant
14 : Pièce de carrosserie
16 : Source de lumière
18 : Surface externe de la pièce de carrosserie
20 : Revêtement semi transparent coloré de la surface externe
22 : Base de peinture teintée
24 : Vernis transparent
26 : Primaire transparent
28 : Surface interne
30 : Revêtement opaque de la surface interne
32 : Zone transparente du revêtement opaque de la surface interne

## Revendications

1. Elément de carrosserie (12) de véhicule automobile comprenant une pièce de carrosserie (14) réalisé en matériau plastique, derrière laquelle est disposée une source de lumière (16), la pièce de carrosserie (14) comprenant une surface externe (18) et une surface interne (28),
la surface externe (18) de la pièce de carrosserie (14) étant revêtue d'un revêtement semi-transparent coloré (20) , comprenant une transmittance strictement comprise entre 0 et 70%, et possédant, lorsque la source de lumière (16) est éteinte, des premières composantes trichromatiques prédéterminées,
la surface interne (28) de la pièce de carrosserie (14) étant revêtue d'un revêtement opaque (30),
le revêtement opaque (30) de la surface interne (28) de la pièce de carrosserie (14)comprenant, en regard de la source de lumière (16), une zone transparente (32) à travers laquelle le rayonnement de la source de lumière (16) peut passer,
de sorte que, lorsque la source de lumière (16) est allumée, la longueur d'onde du rayonnement émis par la source de lumière (16) traversant la zone transparente (32), la pièce de carrosserie (18) et le revêtement semi transparent coloré (20) est modifiée de façon que la surface externe (18) possède des secondes composantes trichromatiques prédéterminées, distinctes des premières composantes trichromatiques prédéterminées,
**caractérisé en ce que** la pièce de carrosserie (14) est réalisée dans un matériau semi-opaque comprenant une transmittance strictement comprise entre 0 et 10%.

2. Elément de carrosserie (12) selon la revendication 1, dans lequel le revêtement opaque (30) de la surface interne (28) de la pièce de carrosserie (14) est composé au moins d'une couche de primaire opaque.

3. Elément de carrosserie (12) selon la revendication 2, dans lequel la zone transparente (32) du revêtement opaque (30) de la surface interne (28) de la pièce de carrosserie (14) est obtenue par :
- grattage du revêtement opaque (30) par application d'un rayonnement laser,
- attaque chimique du revêtement opaque (30),
- grattage mécanique du revêtement opaque (30), ou
- chauffage du revêtement opaque (30).

4. Elément de carrosserie (12) selon la revendication 1, dans lequel le revêtement opaque (30) de la surface interne (28) de la pièce de carrosserie (14) est composé au moins d'un film opaque.

5. Elément de carrosserie (12) selon la revendication 4, dans lequel la zone transparente (32) du revêtement opaque (30) de la surface interne (28) correspond à une zone non opacifiée du film ou une zone découpée du film.

6. Elément de carrosserie (12) selon l'une quelconque des revendications précédentes, dans lequel la pièce de carrosserie (14) est réalisée en polypropylène.

7. Elément de carrosserie (12) selon l'une quelconque des revendications précédentes, dans lequel le revêtement semi transparent (20) de la surface externe (18) de la pièce de carrosserie (14) comprend une base de peinture teintée (22) dont l'épaisseur est de préférence comprise entre 2 et 15 micromètres, recouverte d'un vernis transparent (24) dont l'épaisseur est de préférence comprise entre 5 et 30 micromètres.

8. Elément de carrosserie (12) selon la revendication 7, dans lequel le revêtement semi transparent (20) de la surface externe (18) de la pièce de carrosserie (14) comprend en outre un primaire (26) transparent dont l'épaisseur est de préférence comprise entre 5 et 30 micromètres, appliqué directement sur surface externe (18) de la pièce de carrosserie (14).

9. Elément de carrosserie (12) selon l'une quelconque des revendications précédentes, dans lequel la source de lumière (16) comprend des diodes électroluminescentes ou des fibres optiques.

10. Elément de carrosserie (12) selon l'une quelconque des revendications précédentes, dans lequel la longueur d'onde de la source de lumière (16) est choisie en fonction de la coloration de la pièce de carrosserie (14) et/ou du revêtement semi transparent (20) de sorte que lorsque la source de lumière (16) est allumée, la face externe (18) possède des secondes composantes trichromatiques prédéterminées, distinctes des premières composantes trichromatiques prédéterminées.

11. Procédé de fabrication d'un élément de carrosserie (12) selon la revendication 3, comprenant les étapes suivantes :
- injection de la pièce de carrosserie (14) dans un moule d'injection,
- retrait de la pièce de carrosserie (14) du moule,
- masquage de la surface externe (18) de la pièce de carrosserie,
- application de la couche de primaire opaque (30) sur la surface interne (28) de la pièce de carrosserie,
- démasquage de la surface externe (18) de la pièce de carrosserie,
- application d'une couche de base de peinture teintée (22) sur la surface externe (18) de la pièce de carrosserie (14),
- application d'un vernis (24) sur la surface externe (18) de la pièce de carrosserie
- grattage de la couche de primaire opaque (30) pour obtenir une zone transparente (32) du revêtement de la surface interne (28) de la pièce de carrosserie, et
- intégration de la source lumineuse (16) en regard de la zone transparente (32) de la surface interne (28) de la pièce de carrosserie.

12. Procédé de fabrication d'un élément de carrosserie (12) selon la revendication 4, comprenant les étapes suivantes :
- injection de la pièce de carrosserie (12) dans un moule d'injection,
- retrait de la pièce de carrosserie (14) du moule,
- masquage de la surface interne (28) de la pièce de carrosserie (12),
- application d'une couche de base de peinture teintée (22) sur la surface externe (18) de la pièce de carrosserie,
- application d'un vernis (24) sur la surface externe (18) de la pièce de carrosserie,
- démasquage de la surface interne (28) de la pièce de carrosserie,
- pose du film opaque (30) sur la surface interne (28) de la pièce de carrosserie, et
- intégration de la source lumineuse (16) en regard de la zone transparente (32) de la surface interne (28) de la pièce de carrosserie.

13. Procédé de fabrication d'un élément de carrosserie (12) selon la revendication 4, comprenant les étapes suivantes :
- pose du film opaque (30) sur la matrice d'un moule d'injection de la pièce de carrosserie (14),
- injection de la pièce de carrosserie (14) dans le moule d'injection, le film (30) étant en regard de la surface interne (28) de la pièce de carrosserie,
- retrait de la pièce de carrosserie (14) du moule,
- masquage de la surface interne (28) de la pièce de carrosserie,
- application d'une couche de base de peinture teintée (22) sur la surface externe (18) de la pièce de carrosserie,
- application d'un vernis (24) sur la surface externe de la pièce de carrosserie
- démasquage de la surface interne (28) de la pièce de carrosserie, et
- intégration de la source lumineuse en regard de la zone transparente (32) de la surface interne (28) de la pièce de carrosserie.

## Patentansprüche

1. Karosserieelement (12) eines Kraftfahrzeugs, das ein Karosserieteil (14) aus Kunststoffmaterial aufweist, hinter dem eine Lichtquelle (16) angeordnet ist, wobei das Karosserieteil (14) eine Außenfläche (18) und eine Innenfläche (28) aufweist,
die Außenfläche (18) des Karosserieteils (14) mit einer halbtransparenten farbigen Beschichtung (20) beschichtet ist, die eine Durchlässigkeit streng zwischen 0 und 70% aufweist und bei ausgeschalteter Lichtquelle (16) vorbestimmte erste trichromatische Komponenten besitzt,
die Innenfläche (28) des Karosserieteils (14) mit einer lichtundurchlässigen Beschichtung (30) beschichtet ist,
wobei die lichtundurchlässige Beschichtung (30) der Innenfläche (28) des Karosserieteils (14) in Bezug auf die Lichtquelle (16) einen transparenten Bereich (32) aufweist, durch den die Strahlung der Lichtquelle (16) hindurchgehen kann,
so dass, wenn die Lichtquelle (16) eingeschaltet ist, die Wellenlänge der von der Lichtquelle (16) emittierten Strahlung, die durch den transparenten Bereich (32), das Karosserieteil (18) und die halbtransparente farbige Beschichtung (20) hindurchgeht, so verändert wird, dass die Außenfläche (18) vorbestimmte zweite trichromatische Komponenten aufweist, die sich von den vorbestimmten ersten trichromatischen Komponenten unterscheiden,
**dadurch gekennzeichnet, dass** das Karosserieteil (14) aus einem halblichtdurchlässigen Material hergestellt ist, das einen Transmissionsgrad aufweist, der strikt zwischen 0 und 10% liegt.

2. Karosserieelement (12) nach Anspruch 1, wobei die lichtundurchlässige Beschichtung (30) der Innenfläche (28) des Karosserieteils (14) aus mindestens einer lichtundurchlässigen Grundierungsschicht besteht.

3. Karosserieelement (12) nach Anspruch 2, wobei der transparente Bereich (32) der lichtundurchlässigen Beschichtung (30) der Innenfläche (28) des Karosserieteils (14) erhalten wird durch:
- Abschaben der undurchsichtigen Beschichtung (30) durch Anwendung von Laserstrahlung,
- Chemisches Ätzen der lichtundurchlässigen Beschichtung (30),
- mechanisches Abschaben der lichtundurchlässigen Beschichtung (30) oder
- Erhitzen der lichtundurchlässigen Beschichtung (30).

4. Karosserieelement (12) nach Anspruch 1, wobei die lichtundurchlässige Beschichtung (30) der Innenfläche (28) des Karosserieteils (14) aus mindestens einer lichtundurchlässigen Folie besteht.

5. Karosserieelement (12) nach Anspruch 4, wobei der transparente Bereich (32) der lichtundurchlässigen Beschichtung (30) der Innenfläche (28) einem nicht lichtundurchlässigen Bereich der Folie oder einem ausgeschnittenen Bereich der Folie entspricht.

6. Karosserieelement (12) nach einem der vorhergehenden Ansprüche, wobei das Karosserieteil (14) aus Polypropylen hergestellt ist.

7. Karosserieelement (12) nach einem der vorhergehenden Ansprüche, wobei die halbtransparente Beschichtung (20) der Außenfläche (18) des Karosserieteils (14) eine Grundschicht aus getöntem Lack (22) mit einer Dicke von vorzugsweise 2 bis 15 Mikrometern aufweist, die mit einem Klarlack (24) mit einer Dicke von vorzugsweise 5 bis 30 Mikrometern überzogen ist.

8. Karosserieelement (12) nach Anspruch 7, wobei die halbtransparente Beschichtung (20) der Außenfläche (18) des Karosserieteils (14) zusätzlich einen transparenten Primer (26) aufweist, dessen Dicke vorzugsweise zwischen 5 und 30 Mikrometern liegt und der direkt auf die Außenfläche (18) des Karosserieteils (14) aufgebracht ist.

9. Karosserieelement (12) nach einem der vorhergehenden Ansprüche, wobei die Lichtquelle (16) Leuchtdioden oder Lichtleitfasern umfasst.

10. Karosserieelement (12) nach einem der vorhergehenden Ansprüche, wobei die Wellenlänge der Lichtquelle (16) in Abhängigkeit von der Farbgebung des Karosserieteils (14) und/oder der halbtransparenten Beschichtung (20) so gewählt wird, dass bei eingeschalteter Lichtquelle (16) die Außenfläche (18) vorbestimmte zweite trichromatische Komponenten aufweist, die sich von den vorbestimmten ersten trichromatischen Komponenten unterscheiden.

11. Verfahren zur Herstellung eines Karosserieelements (12) nach Anspruch 3, aufweisend die folgenden Schritte:
- Einspritzen des Karosserieteils (14) in eine Spritzgussform,
- Entfernen des Karosserieteils (14) aus der Spritzgussform,
- Maskieren der Außenfläche (18) des Karosserieteils,
- Aufbringen der lichtundurchlässigen Grundierungsschicht (30) auf die Innenfläche (28) des Karosserieteils,
- Demaskieren der Außenfläche (18) des Karosserieteils,
- Auftragen einer Grundschicht aus getöntem Lack (22) auf die Außenfläche (18) des Karosserieteils (14),
- Auftragen eines Klarlacks (24) auf die Außenfläche (18) des Karosserieteils.
- Abschaben der lichtundurchlässigen Grundierungsschicht (30), um einen transparenten Bereich (32) der Beschichtung der Innenfläche (28) des Karosserieteils zu erhalten, und
- Integrieren der Lichtquelle (16) in Bezug auf den transparenten Bereich (32) der Innenfläche (28) des Karosserieteils.

12. Verfahren zur Herstellung eines Karosserieelements (12) nach Anspruch 4, aufweisend Idie folgenden Schritte:
- Einspritzen des Karosserieteils (12) in eine Spritzgussform,
- Entfernen des Karosserieteils (14) aus der Form,
- Maskieren der Innenfläche (28) des Karosserieteils (12),
- Auftragen einer Grundschicht aus getöntem Lack (22) auf die Außenfläche (18) des Karosserieteils,
- Auftragen eines Klarlacks (24) auf die Außenfläche (18) des Karosserieteils,
- Demaskieren der Innenfläche (28) des Karosserieteils,
- Anbringen der lichtundurchlässigen Folie (30) auf der Innenfläche (28) des Karosserieteils und
- Integrieren der Lichtquelle (16) in Bezug auf den transparenten Bereich (32) der Innenfläche (28) des Karosserieteils.

13. Verfahren zur Herstellung eines Karosserieelements (12) nach Anspruch 4, aufweisend die folgenden Schritte:
- Anbringen der lichtundurchlässigen Folie (30) auf der Matrize einer Spritzgussform für das Karosserieteil (14),
- Einspritzen des Karosserieteils (14) in die Spritzgussform, wobei die Folie (30) der Innenfläche (28) des Karosserieteils zugewandt ist,
- Entfernen des Karosserieteils (14) aus der Spritzgussform,
- Maskieren der Innenfläche (28) des Karosserieteils,
- Auftragen einer Grundschicht aus getöntem Lack (22) auf die Außenfläche (18) des Karosserieteils,
- Auftragen eines Klarlacks (24) auf die Außenfläche des Karosserieteils.
- Demaskieren der Innenfläche (28) des Karosserieteils und
- Integrieren der Lichtquelle in Bezug auf den transparenten Bereich (32) der Innenfläche (28) des Karosserieteils.

## Claims

1. Bodywork element (12) of a motor vehicle comprising a bodywork part (14) made of plastic material, behind which is arranged a light source (16), the bodywork part (14) comprising an external surface (18) and an internal surface (28), the outer surface (18) of the bodywork part (14) being coated with a coloured semi-transparent coating (20), comprising a transmittance strictly between 0 and 70%, and having, when the light source (16) is switched off, first predetermined trichromatic components, the internal surface (28) of the bodywork part (14) being coated with an opaque coating (30), the opaque coating (30) of the inner surface (28) of the bodywork part (14) comprising, opposite the light source (16), a transparent zone (32) through which radiation from the light source (16) may pass, so that, when the light source (16) is switched on, the wavelength of the radiation emitted by the light source (16) passing through the transparent area (32), the bodywork part (18) and the coloured semi-transparent coating (20) is modified so that the outer surface (18) has predetermined second trichromatic components, different from the first predetermined trichromatic components, **characterized in that** the bodywork part (14) is made of a semi-opaque material comprising a transmittance strictly between 0 and 10%.

2. Bodywork element (12) according to claim 1, wherein the opaque coating (30) of the inner surface (28) of the bodywork part (14) is composed of at least one opaque primer layer.

3. Bodywork element (12) according to claim 2, wherein the transparent area (32) of the opaque coating (30) of the inner surface (28) of the bodywork part (14) is obtained by:
- scraping, using laser radiation, the opaque coating (30),
- chemically attacking the opaque coating (30),
- mechanical scraping the opaque coating (30), or
- heating the opaque coating (30).

4. Bodywork element (12) according to claim 1, wherein the opaque coating (30) of the internal surface (28) of the bodywork part (14) is composed of at least one opaque film.

5. Bodywork element (12) according to claim 4, wherein the transparent area (32) of the opaque coating (30) of the inner surface (28) corresponds to an non opaqued area of the film or a cut-out area of the film.

6. Bodywork element (12) according to any one of the preceding claims, wherein the bodywork part (14) is made of polypropylene.

7. Bodywork element (12) according to any one of the preceding claims, wherein the semi-transparent coating (20) of the external surface (18) of the bodywork part (14) comprises a tinted paint base (22) whose thickness is preferably between 2 and 15 micrometers, covered with a transparent varnish (24) whose thickness is preferably between 5 and 30 micrometers.

8. Bodywork element (12) according to claim 7, wherein the semi-transparent coating (20) of the external surface (18) of the bodywork part (14) further comprises a transparent primary (26) whose thickness is preferably between 5 and 30 micrometers, applied directly to the external surface (18) of the bodywork part (14).

9. Bodywork element (12) according to any one of the preceding claims, wherein the light source (16) comprises light-emitting diodes or optical fibers.

10. Bodywork element (12) according to any one of the preceding claims, wherein the wavelength of the light source (16) is selected according to the coloration of the bodywork part (14) and / or the semi-transparent coating (20) so that when the light source (16) is lit, the outer face (18) has second predetermined trichromatic components, distinct from the first predetermined trichromatic components.

11. A method of manufacturing a bodywork element (12) according to claim 3, comprising the following steps:
- injecting the bodywork part (14) into an injection mould,
- removing the bodywork part (14) from the mould,
- masking the external surface (18) of the bodywork part,
- applying the opaque primer layer (30) on the inner surface (28) of the bodywork part,
- unmasking the external surface (18) of the bodywork part,
- applying a base coat of tinted paint (22) on the outer surface (18) of the bodywork part (14),
- applying a varnish (24) on the outer surface (18) of the bodywork part
- scraping the opaque primer layer (30) to obtain a transparent area (32) of the coating of the inner surface (28) of the bodywork part, and
- integrating the light source (16) opposite the transparent area (32) of the inner surface (28) of the bodywork part.

12. A method of manufacturing a bodywork element (12) according to claim 4, comprising the following steps:
- injecting the bodywork part (12) into an injection mould,
- removing the bodywork part (14) from the mould,
- masking the inner surface (28) of the bodywork part (12),
- applying a base coat of tinted paint (22) to the outer surface (18) of the bodywork part,
- applying a varnish (24) on the external surface (18) of the bodywork part,
- unmasking the inner surface (28) of the bodywork part,
- laying an opaque film (30) on the inner surface (28) of the bodywork part, and
- integrating the light source (16) opposite the transparent area (32) of the inner surface (28) of the bodywork part.

13. A method of manufacturing a bodywork element (12) according to claim 4, comprising the following steps:
- laying the opaque film (30) on the matrix of an injection mould of the bodywork part (14),
- injecting the bodywork part (14) into the injection mold, the film (30) being opposite the internal surface (28) of the bodywork part,
- removing the bodywork part (14) from the mold,
- masking the inner surface (28) of the bodywork part,
- applying a base coat of tinted paint (22) on the outer surface (18) of the bodywork part,
- applying a varnish (24) on the external surface of the bodywork part
- unmasking the inner surface (28) of the bodywork part, and
- integration the light source opposite the transparent area (32) of the internal surface (28) of the bodywork part.
